(19) Europäisches Patentamt
European Patent Office
Office européen des brevets

(11) EP 4 657 015 A1

# (12) EUROPEAN PATENT APPLICATION

(43) Date of publication:
**03.12.2025 Bulletin 2025/49**

(21) Application number: **24178925.4**

(22) Date of filing: **29.05.2024**

(51) International Patent Classification (IPC):
***G01B 11/25*** *(2006.01)*

(52) Cooperative Patent Classification (CPC):
**G01B 11/25**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Hexagon Technology Center GmbH**
**9435 Heerbrugg (CH)**

(72) Inventors:
- **STIGWALL, Johan**
**9000 St. Gallen (CH)**
- **KIPFER, Peter**
**CH-9443 Widnau (CH)**
- **JENSEN, Thomas**
**CH-9400 Rorschach (CH)**

(74) Representative: **Kaminski Harmann Patentanwälte AG**
**Landstrasse 124**
**9490 Vaduz (LI)**

## (54) LASER LINE MODULE

(57) The invention pertains to a laser line module (1) for projecting a laser line onto a surface of a distant target object, the projected laser line having a laser line length, the laser line module comprising: a laser diode (11) configured to emit radiation in the form of a laser beam; a beam-shaping optical arrangement; a micro-lens array (15) comprising a multitude of microlenses and having a surface with a height profile, each point on the surface having a distance from an average height of the height profile and providing a divergence for radiation passing through the micro-lens array at the respective point, which divergence depends on the relative height of the respective point; and a spatial light modulator (17) that is provided between the beam-shaping optical arrangement and the micro-lens array (15), wherein the laser diode (11) and the beam-shaping optical arrangement are arranged and configured to guide the radiation along an optical axis of the laser line module (1) onto the spatial light modulator (17), and the spatial light modulator (17) comprises a multitude of elements, each element being controllable to adopt a first state or a second state, wherein each element is configured, while adopting the first state, to let the radiation pass to the micro-lens array (15) and, while adopting the second state, to prevent that the radiation passes to the micro-lens array (15). The invention also pertains to a laser-line triangulation device comprising such a laser line module.

1
11
12
13
14
15
10
16
17
18

Fig. 4a



Processed by Luminess, 75001 PARIS (FR)

## Description

The present invention pertains to a laser line module and to a laser-line triangulation device comprising such a laser line module. The laser line module is configured to project a laser line onto a distant object, wherein the length of the laser line is selectable by controlling a spatial light modulator (SLM), such as a liquid crystal device (LCD), within the laser line module, the SLM selectively blocking certain parts of the emitted radiation, thereby allowing control over the divergence of the radiation and, thus, the laser line length.

It is known to use laser-line triangulation to measure the distance to a surface of an object, and to use the projected laser line to scan the surface to determine its three-dimensional properties. EP 3 165 874 B1 shows a laser line module for triangulation-based distance measurement. Disadvantageously, it is not possible to vary the length of the projected laser line without changing the (working) distance to the object.

When measuring small objects (or small parts of larger objects), a shorter laser line advantageously allows setting a smaller region of interest on the image sensor and thus reduces the data volume per frame captured by the camera (or other sensor) of the laser-line triangulation device. Thereby, capturing of unwanted data can be avoided, if only a certain part of an object, such as a particular edge, is of interest. As a result, by actively reducing the laser line length, higher measuring ratios are achievable. Alternatively or additionally, with shorter line lengths the image sensor may sample smaller pixels, for example to achieve a higher lateral resolution at the same data rate.

Reducing the length of the laser also shows the user how wide the actual scan is. Depending on the object surface, a shorter line may also result in less reflections and thus better data quality.

It is therefore an object of the present invention to provide an improved laser line module that allows varying the length of the laser line independently from the working distance, e.g., while the working distance remains constant.

It is a particular object to provide such a laser line module that allows a user to actively change the laser line length in an easy manner.

It is another object to provide such a laser line module that is cheap and easy to produce and at the same time sturdy and low-maintenance, in particular having no moving parts.

It is a further object to provide laser-line triangulation device comprising such an improved laser line module.

At least one of these objects is achieved by the laser line module accordingto claim 1 and/or the dependent claims of the present invention.

A first aspect of the invention pertains to a laser line module (LLM) for projecting a laser line onto a surface of a distant target object, e.g. as part of a laser-line triangulation device for measuring a distance to said surface, the projected laser line having a laser line length, the laser line module comprising:

- a laser diode configured to emit radiation in the form of a laser beam;
- a beam-shaping optical arrangement; and
- a micro-lens array (MLA) comprising a multitude of microlenses and having a surface with a height profile, each point on the surface having a distance from an average height of the height profile and providing a divergence for radiation passing through the MLA at the respective point, which divergence depends on the relative height of the respective point.

Accordingto this aspect of the invention, the LLM comprises a spatial light modulator (SLM) that is provided between the beam-shaping optical arrangement and the MLA, wherein the laser diode and the beam-shaping optical arrangement are arranged and configured to guide the radiation along an optical axis of the LLM onto the SLM. The SLM comprises a multitude of elements, each element being controllable to adopt a first state or a second state, wherein each element is configured, while adopting the first state, to let the radiation pass to the MLA and, while adopting the second state, to prevent that the radiation passes to the MLA.

Accordingto some embodiments of the LLM, the radiation has a first polarisation and the SLM is an LCD element and comprises a polarizing filter, wherein the LCD element comprises a layer of liquid-crystal molecules, wherein the multitude of elements are a multitude of pixels (i.e., the LCD element comprises a multitude of pixels). Each pixel is controllable to adopt a first state or a second state, wherein each pixel is configured, while adopting the first state, to let the radiation pass through the polarizing filter to the MLA and, while adopting the second state, to prevent that the radiation passes through the polarizing filter to the MLA.

In some embodiments, the polarizing filter is fixedly attached, e.g. glued, to the LCD element.

In some embodiments, the elements of the SLM (e.g., the pixels of the LCD element) are controllable by applying a voltage to them. For instance, each element (pixel) adopts the second state when a voltage is applied to the respective element (pixel) and adopts the first state when no voltage is applied to the respective element (pixel).

According to some embodiments, at least one subset of the pixels of the LCD is arranged relative to the MLA in dependence of the MLA's height profile in such a way that, when the pixels of the subset adopt the second state, the radiation (i.e., a part of the polarized laser beam) is prevented from passing through the polarizing filter to a particular subset of points on the surface of the micro-lens array.

In some embodiments, by controlling said at least one subset of pixels, a plurality of different laser line lengths are achievable without changing a distance between the LLM and the surface of the target object.

According to some embodiments, the pixels are grouped in at least two (or exactly two) pixel-groups that are controllable separately from one another. A first of these pixel-groups is a first subset of pixels that is arranged relative to the MLA in dependence of the MLA's height profile in such a way that, when the pixels of the first subset adopt the second state, the radiation (i.e., a part of the polarized laser beam) is prevented from passing through the polarizing filter to a first particular subset of points on the surface of the MLA. A second of these pixel-groups is a second subset of pixels that is arranged relative to the MLA in dependence of the MLA's height profile in such a way that, when the pixels of the second subset adopt the second state, the radiation (i.e., a part of the polarized laser beam) is prevented from passing through the polarizing filter to a second particular subset of points on the surface of the MLA.

Accordingto some embodiments, the first subset of pixels and the second subset of pixels are arranged relative to the MLA so that, by controlling the first subset of pixels and the second subset of pixels, at least three different laser line lengths are achievable without changing a distance between the LLM and the surface of the target object.

According to some embodiments, all points of a particular subset of points (i.e., all points belonging to the same subset) have a similar distance from an average height of the height profile. In some embodiments, all points of a particular subset of points are positioned on slopes between two height maxima. In some embodiments, all points of a particular subset of points have a relatively small distance from the average height. In some embodiments, all points of a particular subset of points provide a similar divergence, particularly a relatively high divergence.

According to some embodiments, the laser line is projected with a first angular spectrum if each pixel adopts the first state and with a second angular spectrum if each pixel adopts the second state, wherein the second angular spectrum is less than 50% of the first angular spectrum. For instance, the first angular spectrum may be at least $\pm 20°$, particularly at least $\pm 25°$, and the second angular spectrum may be less than $\pm 10°$, particularly less than $\pm 8.5°$.

According to some embodiments, each pixel is configured, while adopting the first state, to polarize the radiation (e.g., change an existing polarization) so that it passes through the polarizing filter.

According to other embodiments, each pixel is configured, while adopting the second state, to polarize the radiation (e.g., change an existing polarization) so that it does not pass through the polarizing filter.

According to some embodiments of the LLM, the polarizing filter is configured to reflect at least 75% of the radiation that does not pass through the polarizing filter, particularly at least 90%, and is arranged tilted relative to the optical axis, so that no radiation is reflected in the direction of the optical axis. In some embodiments, the LLM comprises an aperture and/or a heat sink, arranged so that the radiation is reflected (from the tilted polarizing filter) in the direction of the aperture and/or heat sink.

Accordingto some embodiments of the LLM, the beam-shaping optical arrangement is configured to focus the laser beam in a first direction and widen and collimate it in a second direction.

Accordingto some embodiments of the LLM, the beam-shaping optical arrangement comprises a collimator, a further micro-lens array, and a cylinder lens, wherein the laser diode, the collimator, the further micro-lens array and the cylinder lens are arranged and configured to guide the radiation along an optical axis of the laser line module onto the spatial light modulator. In some embodiments, the collimator comprises an aperture slit for improving line thickness and depth of field of the laser line.

According to some embodiments of the LLM, the SLM (e.g., the LCD element) comprises a second polarizing filter that is provided between the SLM and the beam-shaping optical arrangement to produce the first polarization, for instance wherein the second polarizing filter is fixedly attached, e.g. glued, to the SLM.

A second aspect of the invention pertains to a laser-line triangulation device for measuring a distance to the surface of a target object. The device comprises an image sensor, e.g. as a part of a camera, and a laser line module according to the first aspect of the invention, the LLM and the image sensor being arranged and oriented so that the LLM projects a laser line into a field-of-view of the image sensor.

Accordingto some embodiments, the laser-line triangulation device is configured for scanning the surface of the target object with the laser line projected by the laser line module.

The invention in the following will be described in detail by referring to exemplary embodiments that are accompanied by figures, in which:

| | |
|---|---|
| Fig. 1 | shows a laser-line triangulation sensor; |
| Fig. 2 | shows the components of a generic laser line module; |
| Fig. 3a | shows laser line lengths varying in dependence of different working distances; |
| Fig. 3b | shows a variation of the laser line lengths at a constant working distance; |
| Figs. 4a-b | show an exemplary embodiment of a laser line module according to the invention; |
| Fig. 5 | illustrates the angular spectrum of rays transmitted by a micro-lens array in accor- |

dance with a profile of the micro lenses;

Figs. 6a-b illustrate the basic principle of LCD transmissions;

Fig. 7 shows an exemplary LCD element having a three-level setup:

Fig. 8 shows the three angular spectra achievable with the setup of Fig. 7;

Figs. 9a-c show three resulting laser line lengths;

Fig. 10 shows exemplary indications of size for gaps and elements of the setup of Fig. 7;

Fig. 11 shows the intensities resulting from the gaps and elements of Fig. 10; and

Figs. 12a-b show a laser line module having a tilted reflective polarizer.

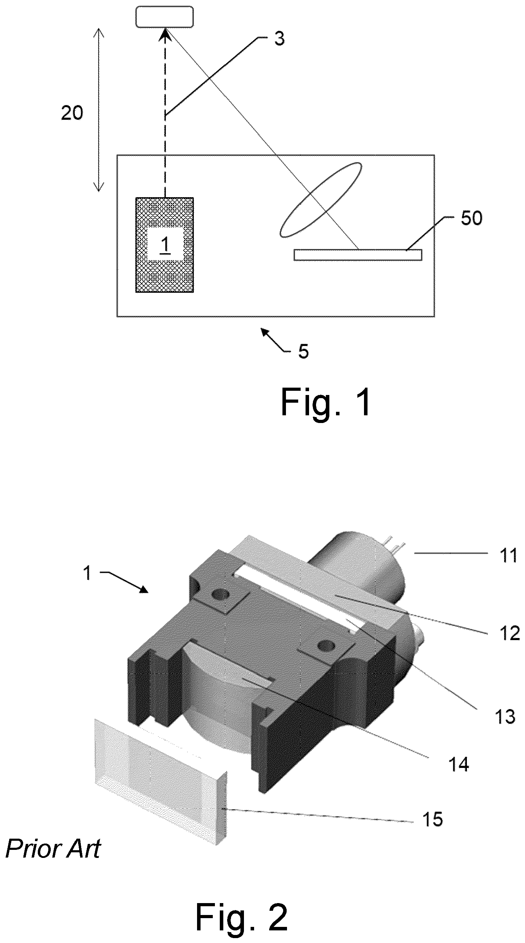

**Figure 1** shows an exemplary embodiment of a laser-line triangulation device 5 according to the invention. The device 5 comprises a laser line module (LLM) 1 configured to emit a laser line 3 onto a surface of an object, which surface produces a scattered reflection of the laser line. Although the laser line 3 is described as a line, it is technically speaking a two-dimensional "line-like" plane having a width that is very small compared to its length. The device 5 comprises a sensor arrangement comprising an image sensor 50 that is configured to image the scattered reflection of the laser line. The laser line 3 is shown from the side here, i.e., perpendicular to the image plane, and is therefore represented by a single line (in one dimension). The distance between the LLM 1 and the object is the working distance (WD) 20. The LLM 1 projects the laser line 3 onto a surface of the distant object and a camera of the laser-line triangulation device 5, comprising a lens and an image sensor 50, views the laser line and extracts a 3D profile of the surface in a manner that is generally known in the art.

**Figure 2** shows an exemplary LLM 1 that is part of a generic laser-line triangulation device. The shown LLM 1, which is generally known in the art, comprises a laser diode 11, a collimator 12, a first microlens array (MLA) 13, a cylinder lens 14, and a second MLA 15. The collimator 12, first MLA 13 and cylinder lens 14 together form a beam-shaping optical arrangement configured to focus the laser light from the laser diode 11 in a first direction and widen and collimate it in a second direction.

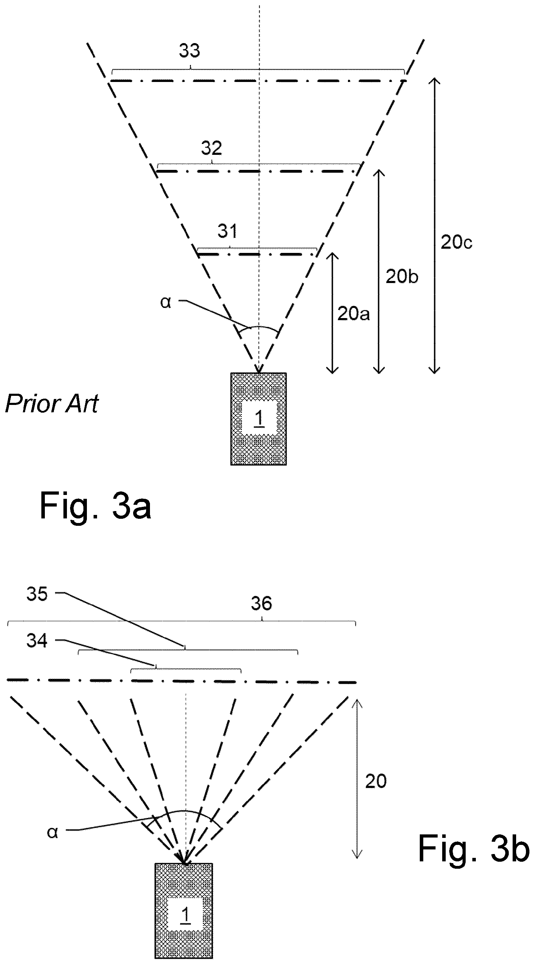

As illustrated in **Figure 3a,** an LLM 1 as shown in **Figure 2** has a fixed angular spectrum (divergency angle $\alpha$). Consequently, the resulting length of the projected laser line (laser line length, LLL) 31-33 depends on the respective working distance (WD) 20a-c, i.e. the distance of the LLM 1 to the surface onto which the laser line is projected. As shown in in **Figure 3a,** a short WD 20a results in a short LLL 31, and longer WDs 20b, 20c in respectively longer LLLs 32, 33.

**Figure 3b** illustrates varying the LLL without having to change the working distance WD 20. As shown in in **Figure 3b,** a constant WD 20 leads to a variety of LLLs 34-36. Among other things, this allows reducing the data volume per frame, thus allowing higher measurement rates for smaller objects (e.g. when scanning an edge).

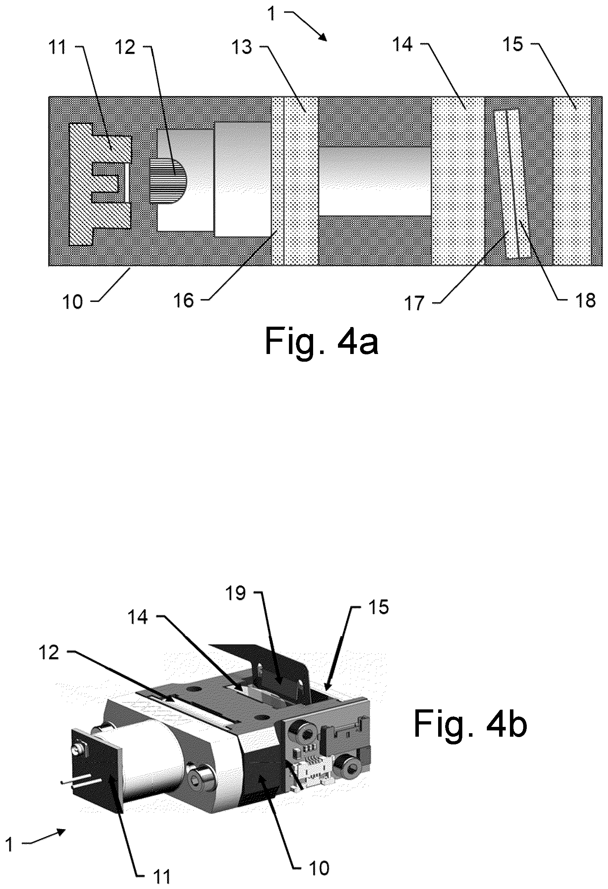

**Figures 4a and 4b** illustrate an exemplary embodiment of an LLM 1 according to the invention, where **Figure 4a** shows a cross-sectional view of the LLM 1. Similarly to the LLM of **Figure 2,** the LLM 1 shown here comprises a laser diode 11, a collimator 12, a first microlens array (MLA) 13, a cylinder lens 14 and a second MLA 15. In order to achieve the variation of the LLL illustrated in **Figure 3b,** the LLM 1 additionally comprises a spatial light modulator (SLM) 17 and a polarizing filter (polarizer) 18 that are positioned between the cylinder lens 14 and the second MLA 15. In the shown example the SLM 17 is a liquid crystal device (LCD) element.

Optionally, the LCD element 17 can be provided in a thin cavity (e.g., < 10 $\mu$m) between two glass plates. The polarizer 18 may be a thin foil that is glued to the LCD element 17 or to a glass plate in between the LCD element 17 and the polarizer 18.

The collimator 12, first MLA 13 and cylinder lens 14 together form a beam-shaping optic or optical arrangement configured to focus the laser light from the laser diode 11 in a first direction and widen and collimate it in a second direction and to guide the laser light onto the LCD element 17.

The laser light has a first polarisation when arriving at the LCD element 17. In some embodiments, the laser diode 11 is a polarized laser diode. Alternatively or additionally, a further polarizing filter may be provided in front of the LCD element 17, i.e. somewhere between the laser diode 11 and the LCD element 17, for instance glued to the LCD element 17. For instance, there might be a further polarizer in front of the LCD to clean the polarization state of the polarized laser diode light to achieve a better extinction for the LCD element 17 and polarizer 18.

The collimator 12 may have an aperture slit for improving line thickness and depth of field of the projected laser line.

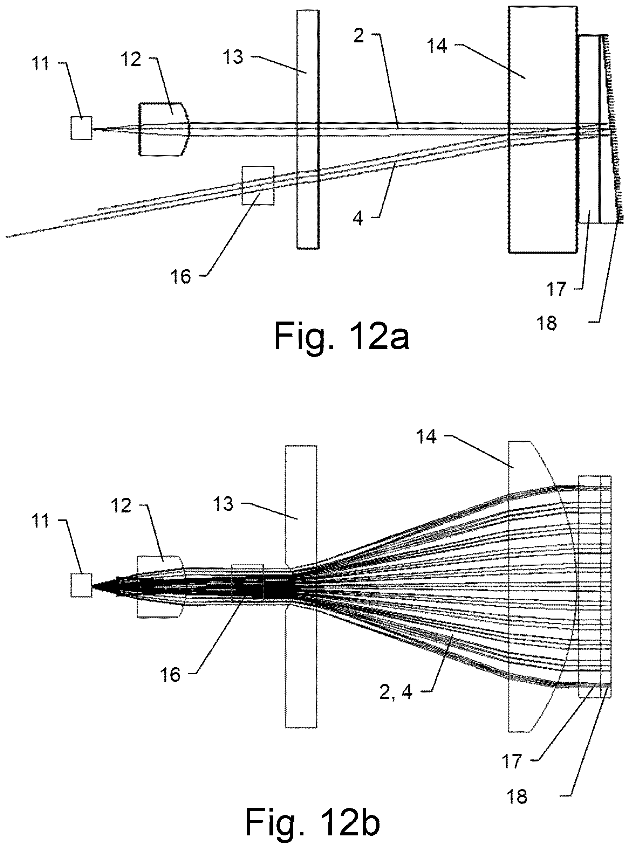

An aperture 16 with a heat sink is placed next to the first MLA 13 within the housing 10 of the LLM 1. Reflections from the polarizer 18 can be guided to the aperture to avoid feedback into the laser diode 11. This is described in more detail with respect to **Figures 12a-b.**

A user interface may be provided at the laser-line triangulation device (not shown here) that allows a user to select one of multiple (e.g., three) LLLs. Alternatively or additionally, the laser-line triangulation device may be configured to automatically select the most appropriate LLL for the objectto be inspected. For instance, this may include detecting the kind and/or size of the object of interest in images captured by the image sensor, and/or reducing the LLL after detecting that a present LLL is larger than necessary for measuring a certain object or feature.

Instead of the shown LCD element, other kinds of SLMs might be used in a similar way. For instance, an SLM based on LCoS (liquid crystal on silicon) in a reflection setup can be used. Polarized light from the laser diode is guided into a PBS (polarization beam splitter) and reflected by the dielectric coating towards an LCoS device. After transmission and reflection at the LCoS device, the polarization state is rotated for elements dedicated for signal response and the light will pass through the PBS towards the second MLA 15. Light from elements dedicated to suppression will not pass through the PBS but will be reflected back to the laser diode path. Alternatively, an SLM based on micro-mirrors (e.g. DMD) will also work in reflection mode but does not require a polarization control of the light.

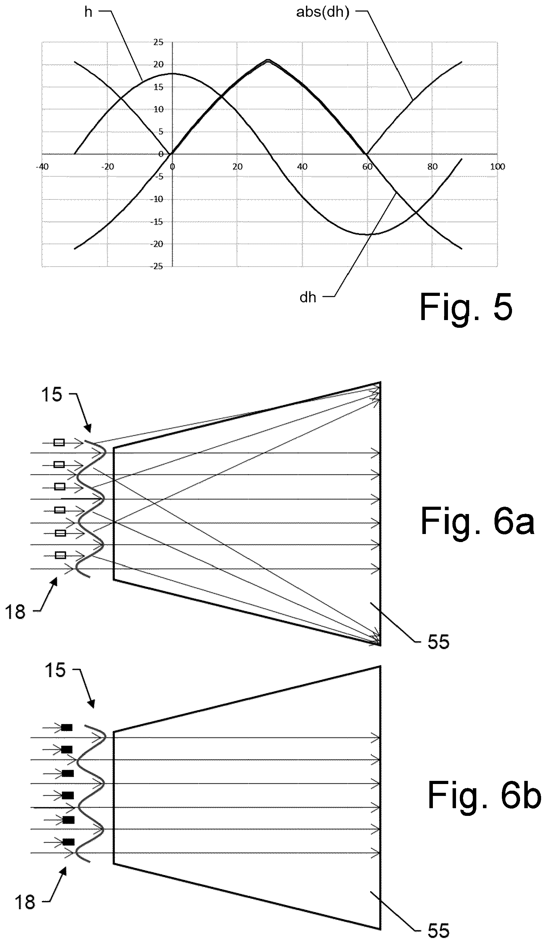

To explain to working principle of the LCD element, the functionality of the second MLA is illustrated first. The diagram of **Figure 5** shows the profile h of the array's microlenses overlaid with the resulting divergence dH - and the resulting absolute divergence (i.e. divergence without algebraic sign) abs(dH). An angular spectrum of the transmitted rays is spatially assigned to the periodic pattern of the MLA. More particularly, it can be seen that the divergence of the emitted radiation is the lowest at the profile's peaks and valleys (i.e., its maxima) and the highest at the slopes between the peaks and valleys. Thus, if radiation would be emitted only at or around the maxima of the profile, the result would be a low divergence and, thus, a small LLL.

To achieve this, according to the invention, a SLM, for instance embodied as an LCD element, is placed in front of the MLA to carry out spatial filtering in particular areas of the microlenses so that the transmitted divergences can be selected. In order to allow very fine divergence adjustment, an LCD array with a resolution in the micrometer range could be used. The working principle of the LCD element 17 in combination with the second MLA 15 is illustrated in **Figures 6a and 6b.** The LCD element 17 comprises a plurality of "pixels", wherein - in combination with the polarizer 18 - a transmittance of these pixels for the LLM's rays can be controlled. In other words, the pixels can be turned either transparent or opaque. In particularly, the LCD pixels can be positioned in front of the high-slope areas of the MLA 15. In **Figure 6a,** the "pixels" of the LCD element 17 are turned transparent, so that all rays are transmitted onto the MLA 15. This leads to a wide line length, e.g. covering the whole width of the field-of-view 55 of the image sensor of the laser-line triangulation device. In **Figure 6b,** "pixels" of the LCD element 17 are turned opaque to obscure the high-slope areas of the MLA 15. This reduces the fan angle, and thus the resulting LLL. Optionally, the LCD 17 may comprise two or more pixel-groups to allow achieving a larger number of different LLLs. For instance, with two pixel-groups, three LLLs are achievable, which is sufficient for most applications.

In some embodiments, to prevent transmission (i.e., be opaque), the LCD's liquid crystal molecules rotate the input polarization by $\frac{\lambda}{2}$ (lambda/2) so that the subsequently arranged polarizer absorbs the light or reflects it back (depending on the polarizer type). When there is no voltage, the rays propagate through the LCD without polarization rotation and thus pass through the polarizer to the second MLA.

In other embodiments, a Twisted Nematic (TN) LC cell or Pi cells may be used. In the case of a TN cell, the two inner glass surfaces are arranged orthogonally, i.e. with an angle of 90° to each other so that the LC molecules align with the surfaces and form a spiral through the cell. Due to the strong birefringence of the orthogonally arranged LC material, the polarization of the incident light rotates. This means that input light, which is linearly polarized and aligned with the LC axes, is guided to follow the spiral rotation of the strongly birefringent material. With a polarizer at the output that is 90° rotated to the input polarization, the light in this voltage-free ("relaxed") state traverses the polarizer (basically) without losses and proceeds to the second MLA. To stop transmission, a voltage is applied across the cell. The voltage causes all LC molecules to align along the optical axis and therefore no longer exhibit birefringence. The light then passes through the LC medium without being rotated and is blocked at the output polarizer.

In a relaxed state (no voltage applied), the molecules are oriented like a spiral from one plate to the other and introduce a polarization rotation of 90°. When applying a modulation voltage (AC), the molecules tilt to lie mostly parallel to the optical axis, thus losing their spiral shape and presenting a negligible birefringence. Thus, with voltage the polarization is not affected.

In the case of a setup with a 90° rotated polarizer and an inverted LCD pattern all areas would be undervoltage for transmission through the polarizer and a maximum linewidth. Such a setup requires three controllable segments, whereas the noninverted setup advantageously only requires two. Also, since the gaps would be dark, this might lead to artifacts along the line intensity.

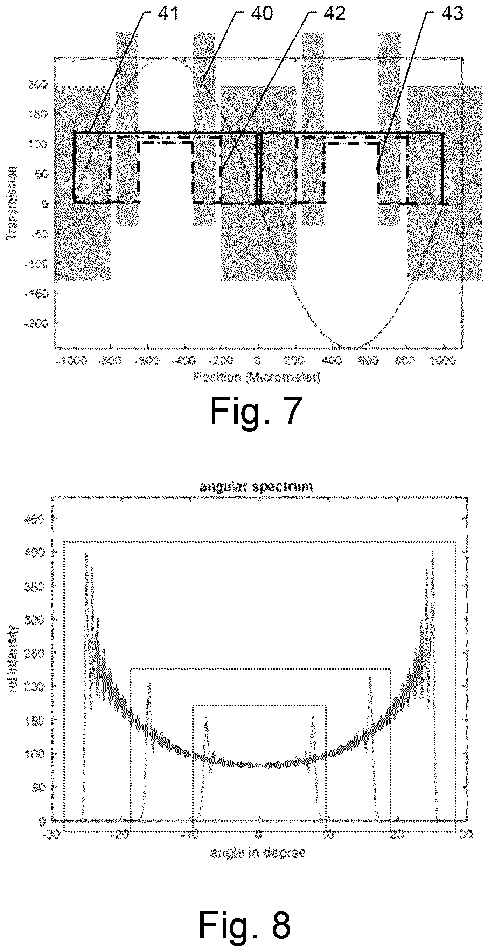

**Figure 7** shows a three-level divergence configuration to be achieved. Instead of having many small "pixels" like on a typical display, the three levels are realized with a custom LCD that only has two rectangular segments or pixel groups ("A" and "B") that together provide a three-level divergence configuration of the LCD element, i.e., three different transmission areas 41-43. Curve 40, which is overlaid over the configuration, shows the height of the profile of the second MLA. The three levels of the LCD element are realized by the two differently controllable pixel groups A and B, each providing a different transmission area 41, 42. Line 41 shows the transmission area of the broad segment B, line 42 shows the transmission area of the narrow segment A. Line 43 shows a third transmission area which is always transmitted.

As shown in **Figure 8,** the exemplary three-level LCD of **Figure 7,** in conjunction with the second MLA, can generate three different angular spectra of, e.g., ± 8.3°, ± 16.6° and ± 25°.

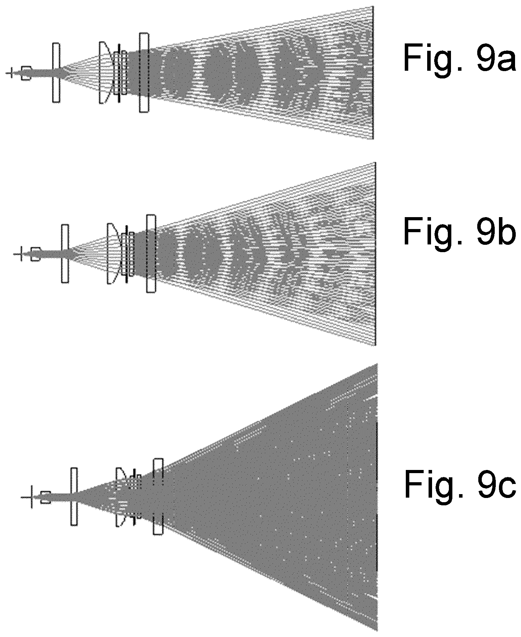

The resulting divergences and the possible LLLs resulting from each level's divergence are shown in **Figures 9a-c.** With only the transmission area 42 of the narrow segment A, only rays with a relatively weak divergence propagate, so that the realized LLL is small (**Figure 9a**). With only the transmission area 41 of the broad segment B, more divergence is allowed, and a medium-sized LLL is obtained (**Figure 9b**). With the transmission areas 41, 42 of both segments A and B, a full width LLL is obtained (**Figure 9c**). The transmittance of the LCD can be adjusted via the applied voltage in the segments A and B. Thus, a user of the device may easily select one of the three LLLs.

In a preferred embodiment, not applying a voltage to a particular pixel group effects transmission at the respective transmission area, and applying a voltage prevents transmission. Advantageously, this means that for the smallest angle range no electrode is needed.

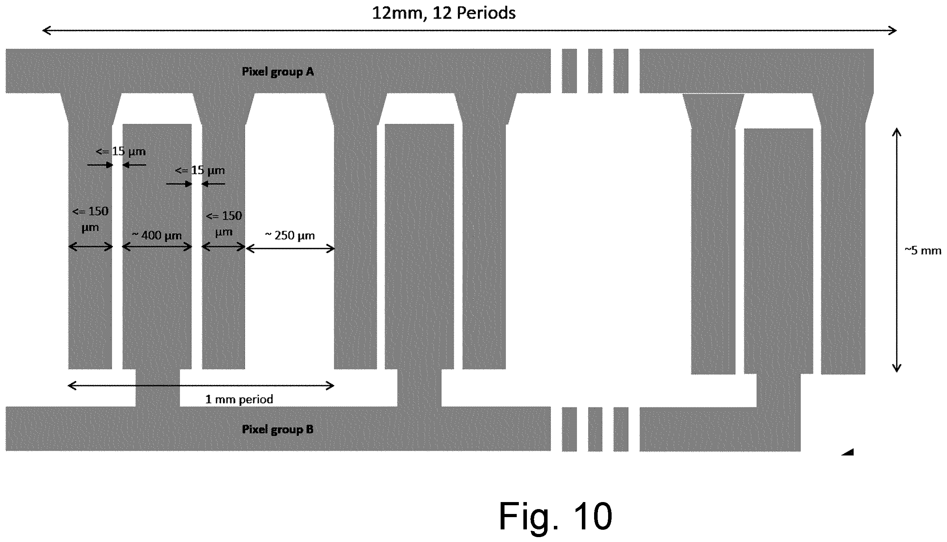

**Figure 10** shows a setup of an exemplary three-level LCD element in detail. As described above with respect to **Figure 7,** the LCD element comprises two pixel-groups A and B. These are arranged to hide the slopes of the second MLA's height profile, whereas a large gap of 250 μm that always allows transmission is arranged in front of each of the maxima and minima of the second MLA's height profile. The pixel-groups A and B are arranged relative to another with a small gap between them. These small gaps cannot be avoided during production. Disadvantageously, with three LLLs, they lead to transmission artifacts that become visible at the smallest LLL. To reduce these artifacts, the gap width preferably should be as small as possible. In the shown example, the arrangement is realized with a width of 150 μm for pixel group A and 400 μm for pixel group B, and a gap of 15 μm between them.

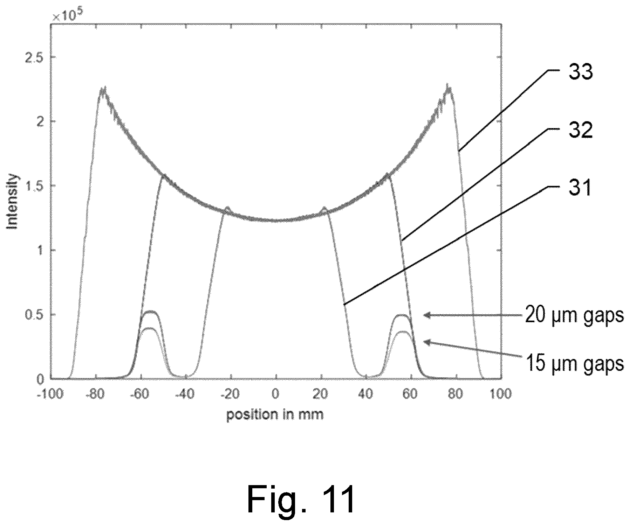

**Figure 11** shows the resulting intensity distribution for three different LLLs realized by the LCD element of **Figure 10.** Note the M profile of the intensity distributions 31-33, which is advantageous for laser-line triangulation sensors. The three M-shaped curves show the intensity at a working distance of 150 mm for LLLs of 150 mm (curve 33), 100 mm (curve 32), and 50 mm (curve 31). Due to the transparent gaps between the two pixel groups A and B shown in **Figure 10,** artifacts appear in the shortest LLL 31. The 50 mm LLL 31 shows two side peaks in its intensity that are dependent on the respective gap width: the larger the gap, the higher the intensity. To illustrate the influence of the gap width on these artifacts, two different peaks for the case of 15 μm gaps and 20 μm gaps are shown here.

**Figures 12a and 12b** show an exemplary embodiment of an LLM according to the invention with a tilted arrangement of the LCD element 17 (or other SLM) and the polarizer 18. **Figure 12a** shows the setup from the side, and **Figure 12b** from the top. The use of a reflective polarizer 18 advantageously avoids heating and thus potential damage of the polarizer. A reflective polarizer 18 means that the non-transmitted radiation is not terminated by absorption but by reflection. Tilting the polarizer 18, avoids feedback into the laser diode 11. This means that the reflection 4 of the laser 2 does not end up in the emission surface of the laser diode 11. Instead, it can be terminated in a controlled manner on the aperture 16. As can be seen in **Figure 12b,** the fast axis of the laser diode 11 remains basically unaffected. Tilting the polarizer effects only the slow axis of the laser diode as shown in **Figure 12a:** The reflection does not propagate back coaxially. Optionally, as shown in **Figure 4a,** also the LCD element 17 to which the polarizer 18 is mounted (e.g. glued) can be provided tilted.

Although the invention is illustrated above, partly with reference to some preferred embodiments, it must be understood that numerous modifications and combinations of different features of the embodiments can be made. All of these modifications lie within the scope of the appended claims.

## Claims

**1.** Laser line module (1) for projecting a laser line (3) onto a surface of a distant target object, particularly as part of a laser-line triangulation device (5) for measuring a distance to said surface, the projected laser line having a laser line length (31-33), the laser line module (1) comprising:

- a laser diode (11) configured to emit radiation in the form of a laser beam (2);
- a beam-shaping optical arrangement; and
- a micro-lens array (15) comprising a multitude of microlenses and having a surface with a height profile (h), each point on the surface having a distance from an average height of the height profile (h) and providing a divergence (dh) for radiation passing through the micro-lens array (15) at the respective point, which divergence depends on the relative height of the respective point,

**characterized by**
a spatial light modulator (17) that is provided between the beam-shaping optical arrangement and the micro-lens array (15), wherein

- the laser diode (11) and the beam-shaping optical arrangement are arranged and configured to guide the radiation along an optical axis of the laser line module (1) onto the spatial light modulator (17); and
- the spatial light modulator (17) comprises a multitude of elements, each element being controllable to adopt a first state or a second state, wherein each element is configured, while adopting the first state, to let the radiation pass to the micro-lens array (15) and, while adopting the second state, to prevent that the radiation passes to the micro-lens array (15).

**2.** Laser line module (1) according to claim 1, wherein the radiation has a first polarisation and the spatial light modulator (17) is an LCD element and comprises a polarizing filter (18), wherein the LCD element comprises a layer of liquid-crystal molecules, wherein the multitude of elements are a multitude of pixels, each pixel being controllable to adopt a first state or a second state, wherein each pixel is configured, while adopting the first state, to let the radiation pass through the polarizing filter (18) to the micro-lens array (15) and, while adopting the second state, to prevent that the radiation passes through the polarizing filter (18) to the micro-lens array (15), particularly wherein

- each pixel adopts the second state when a voltage is applied to the respective pixel, and adopts the first state when no voltage is applied to the respective pixel; and/or
- the polarizing filter (18) is fixedly attached to the LCD element, particularly glued to the LCD element.

**3.** Laser line module (1) according to claim 2, wherein at least one subset of the pixels is arranged relative to the micro-lens array (15) in dependence of the height profile (h) in such a way that, when the pixels of the subset adopt the second state, the radiation is prevented from passing through the polarizing filter (18) to a particular subset of points on the surface of the micro-lens array (15),
particularly wherein, by controlling the at least one subset of pixels, a plurality of different laser line lengths (31-33) are achievable without changing a distance (20) between the laser line module (1) and the surface of the target object.

**4.** Laser line module (1) according to claim 2 or claim 3, wherein the pixels are grouped in at least two, particularly exactly two, pixel-groups that are controllable separately from one another,

- a first pixel-group being a first subset of pixels that is arranged relative to the micro-lens array (15) in dependence of the height profile (h) in such a way that, when the pixels of the first subset adopt the second state, the radiation is prevented from passing through the polarizing filter (18) to a first particular subset of points on the surface of the micro-lens array (15); and
- a second pixel-group being a second subset of pixels that is arranged relative to the micro-lens array (15) in dependence of the height profile (h) in such a way that, when the pixels of the second subset adopt the second state, the radiation is prevented from passing through the polarizing filter (18) to a second particular subset of points on the surface of the micro-lens array (15).

**5.** Laser line module (1) according to claim 4, wherein the first subset of pixels and the second subset of pixels are arranged relative to the second micro-lens array (15) so that, by controlling the first subset of pixels and the second subset of pixels, at least three different laser line lengths (31-33) are achievable without changing a distance (20) between the laser line module (1) and the surface of the target object.

**6.** Laser line module (1) according to any one of claims 3 to 5, wherein all points of a particular subset of points have a similar distance from an average height of the height profile (h), in particular wherein all points of a particular subset of points

- are positioned on slopes between two height maxima; and/or
- have a relatively small distance from the average height.

**7.** Laser line module (1) according to any one of claims 3 to 6, wherein all points of a particular subset of points provide a similar divergence (dh), particularly a relatively high divergence.

**8.** Laser line module (1) according to any one of claims 2 to 7, wherein the laser line (3) is projected with a first angular spectrum if each pixel adopts the first state and with a second angular spectrum if each pixel adopts the second state, wherein the second angular spectrum is less than 50% of the first angular spectrum, particularly wherein

- the first angular spectrum is at least $\pm 20°$, particularly at least $\pm 25°$, and,
- the second angular spectrum is less than $\pm 10°$, particularly less than $\pm 8.5°$.

**9.** Laser line module (1) according to any one of claims 2 to 8, wherein each pixel is configured, while adopting the first state, to polarize the radiation so that it passes through the polarizing filter (18).

**10.** Laser line module (1) according to any one of claims 2 to 8, wherein each pixel is configured, while adopting the second state, to polarize the radiation so that it does not pass through the polarizing filter (18).

**11.** Laser line module (1) according to any one of the preceding claims, wherein the polarizing filter (18)

- is configured to reflect at least 75% of the radiation that does not pass through the polarizing filter (18), particularly at least 90%, and
- is arranged tilted relative to the optical axis,

particularly wherein

- no radiation is reflected in the direction of the optical axis; and/or
- the laser line module (1) comprises an aperture (16) and/or a heat sink, arranged so that the radiation is reflected in the direction of the aperture (16) and/or heat sink.

**12.** Laser line module (1) according to any one of the preceding claims, wherein the beam-shaping optical arrangement

- is configured to focus the laser beam (2) in a first direction and widen and collimate it in a second direction, and/or
- comprises a collimator (12), a further micro-lens array (13), and a cylinder lens (14), wherein the laser diode (11), the collimator (12), the further micro-lens array (13) and the cylinder lens (14) are arranged and configured to guide the radiation along an optical axis of the laser line module (1) onto the spatial light modulator (17), in particular wherein the collimator (12) comprises an aperture slit for improving line thickness and depth of field of the laser line (3).

**13.** Laser line module (1) according to any one of the preceding claims, wherein the spatial light modulator (17) comprises a second polarizing filter that is provided between the spatial light modulator (17) and the beam-shaping optical arrangement to produce the first polarization, in particular wherein the second polarizing filter is fixedly attached to the spatial light modulator (17), particularly glued to the LCD element (17).

**14.** Laser-line triangulation device (5) for measuring a distance to the surface of a target object, the device comprising an image sensor (50) and a laser line module (1) according to any one of the preceding claims, the laser line module (1) and the image sensor (50) being arranged and oriented so that the laser line module (1) projects a laser line (3) into a field-of-view (55) of the image sensor (50).

**15.** Laser-line triangulation (5) device according to claim 14, configured for scanning the surface of the target object with the laser line (3) projected by the laser line module (1).

3
20
50
1
5

Fig. 1

1
11
12
13
14
15
Prior Art

Fig. 2

33
32
31
20c
20b
20a
α
Prior Art
1

Fig. 3a

35
36
34
20
α
1

Fig. 3b

1
11
12
13
14
15
10
16
17
18

Fig. 4a

19
14
15
12
1
11
10

Fig. 4b

h
abs(dh)
25
20
15
10
5
0
-5
-10
-15
-20
-25
-40
-20
0
20
40
60
80
100
dh

Fig. 5

15
18
55
15
18
55

Fig. 6a

Fig. 6b

41
40
42
43
A
A
A
A
B
B
B
Transmission
Position [Micrometer]
200
150
100
50
0
-50
-100
-150
-200
-1000
-800
-600
-400
-200
0
200
400
600
800
1000

Fig. 7

angular spectrum
rel intensity
angle in degree
450
400
350
300
250
200
150
100
50
0
-30
-20
-10
0
10
20
30

Fig. 8

Fig. 9a

Fig. 9b

Fig. 9c

~5 mm
12mm, 12 Periods
Pixel group A
Pixel group B
~ 250 µm
1 mm period
<= 150 µm
<= 15 µm
~ 400 µm
<= 15 µm
<= 150 µm

Fig. 10

×10^5
2.5
2
1.5
1
0.5
0
Intensity
-100
-80
-60
-40
-20
0
20
40
60
80
100
position in mm
33
32
31
20 µm gaps
15 µm gaps

Fig. 11

11
12
13
2
14
4
16
17
18


Fig. 12a

14
11
12
13
16
2, 4
17
18


Fig. 12b

Europäisches Patentamt
European Patent Office
Office européen des brevets

# EUROPEAN SEARCH REPORT

Application Number
EP 24 17 8925

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | EP 3 165 874 B1 (HEXAGON TECHNOLOGY CT GMBH [CH]) 19 August 2020 (2020-08-19)<br>* paragraph [0075] - paragraph [0091]; figures 3a,3b,3c *<br>----- | 1-15 | INV.<br>G01B11/25 |
| A | WO 2020/102658 A2 (CARESTREAM DENTAL LLC [US]) 22 May 2020 (2020-05-22)<br>* paragraph [0048] - paragraph [0066]; figures 4-6 *<br>----- | 1-15 | |

TECHNICAL FIELDS SEARCHED (IPC)

G01B
G02B

The present search report has been drawn up for all claims

| Place of search | Date of completion of the search | Examiner |
|---|---|---|
| Munich | 27 October 2024 | Biedermann, Benjamin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 17 8925

This annex lists the patent family members relating to the patent documents cited in the above-mentioned European search report. The members are as contained in the European Patent Office EDP file on
The European Patent Office is in no way liable for these particulars which are merely given for the purpose of information.

27-10-2024

| Patent document cited in search report | Publication date | Patent family member(s) | Publication date |
|---|---|---|---|
| EP 3165874 B1 | 19-08-2020 | CN 107037443 A | 11-08-2017 |
| | | EP 3165874 A1 | 10-05-2017 |
| | | US 2017123053 A1 | 04-05-2017 |
| WO 2020102658 A2 | 22-05-2020 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3165874 B1